# EUROPEAN PATENT APPLICATION

(11) **EP 2 927 878 A1**
(43) Date of publication of application: **07.10.2015**
(21) Application number: 14380014.2
(22) Date of filing: 04.04.2014
(51) Int. Cl.: G06T 15/60

(54) **Computer implemented method to obtain a virtual shadow of a person within a virtual scene**

(71) Applicant: Brainstorm Multimedia, S.L., 46005 Valencia (ES)
(72) Inventor: Montesa Andrés, Ricardo, 46005 Valencia (ES); Ferrer Serra, Moisés, 46019 Valencia (ES)
(74) Representative: Ungria López, Javier

(57) **Abstract**

A computer implemented method for obtaining a virtual shadow within a virtual scenario from a person,

Comprises, using an algorithm executed in a processing unit of a computing device: extracting, of a captured image of a person, a silhouette image of the person; locating at least a position of the person feet on the silhouette image, locating a tridimensional position corresponding in the virtual scenario; and obtaining a person shadow image to be placed on said located position of the person feet in the virtual scenario, the obtaining being performed by estimating different contributions that come from the located position of the person feet in the silhouette image and/or from different pixels or groups of pixels also located on the silhouette image and selected depending on their relative positions to the person feet.

## Description

### Field of the invention

The invention in general relates to the field of computer graphics and to virtual set design. In particular, the invention relates to a computer implemented method for obtaining a virtual shadow of a person within a virtual scenario.

### Background of the invention

Traditional virtual studios operate through the superimposition of two images, one being a computer generated image of the virtual scenario and another being a real image. This later image is usually of a presenter, i.e. the person who will present a TV program and who will be integrated within the afore-mentioned virtual scenario.

In a great number of cases, both images are directly integrated without paying attention to the shadow that the person should cast within the virtual scenario. This way of operating makes sense in most cases, as with medium and close-up shots the absence of such shadows generally does not disrupt the perception of the scene as far as the audience is concerned. However, in long shots, the absence of a shadow beneath the presenter's feet produces an unwanted effect. The presenter is perceived to be floating above the scene and the fact that there are two superimposed images is evident.

There are different techniques used in this field to obtain and integrate these shadows within the virtual scenario:
- Integration done by the image insertion equipment:
   Based on the image of a person on a blue or green background, the image insertion device is able to identify the shadow of the person on a cyclorama and to integrate with a computer generated image in a very convincing way.
   This technique however has a drawback. It requires very precise adjustment to the lighting and of the embedding parameters to avoid the detection of false shadows in the outline of the silhouette of the person. Besides, in general it is not possible to obtain the same inlay quality when the system is adjusted for the detection of shadows.
   Also, currently many virtual sets have ceased to be based on the fusion of two images, real and virtual. Instead, once the image of the person has been captured, a graphic station gets the silhouette and positions it as one more object in the computer generated scenario. This new way of operating is incompatible with shadows obtained by means of this method.
- Projecting the person's silhouette:
   In this case, once the person's silhouette is available in the graphic station, a simple calculation is made of the shadow that the silhouette would cast within the scenario. This technique has various drawbacks. The fact that the person's silhouette is a flat object is quickly noticed due to the projected shadow. Moreover, as the person moves within the image, his silhouette and shadow become misaligned at the point at which they should meet and the resulting artifacts disrupt the desired effect.
- Obtaining of the projected shadow by the use of an additional camera:
   This technique is based on the fact that a silhouette of an object and its shadow coincide where the point of view and the light source which causes a shadow, coincide. The procedure involves placing a second camera at a point corresponding to the place from which a shadow of the person in the virtual scenario needs to be casted. The image captured by this camera will contain the person's silhouette that, projected as a slide from the expected position within the virtual scenario, will simulate with high a high degree of accuracy the shadow that the person would cast.
   The result obtained by this technique, being very accurate, has two limitations. First, in order for the person's silhouette to be fully captured, the person must keep within the space captured by the second camera. If this is not the ease then the correct result will not be achieved. Secondly, this technique adds new equipment and complexity to the virtual scenario. The set up of an additional camera and the necessary associated equipment in order to achieve these results, is often too complex for organisations with limited resources or staff and which cannot afford the extra maintenance.

### Summary of the Invention

The invention overcomes the above limitations providing a computer implemented method for obtaining, in real time, a virtual shadow of a person within a virtual scenario using a minimum of resources and equipment.

To do this, in the proposed method an image of the person is captured by means of a physical camera against a solid color background, typically a blue or green screen. Then, by using an algorithm running in a processing unit of a computing device, the method characteristically comprises the following steps: extracting from the captured image, a silhouette of the person; analyzing the extracted silhouette image in order to locate the position of at least one of the person's feet and for locating within said virtual scenario the three dimensional position of a minimum of one of the person's two feet; obtaining an image of the person's shadow which is then placed in said three dimensional position previously located in the virtual scenario. Obtaining the image of the shadow through calculating various contributing inputs regarding the said shadow and which can be sourced from different elements which are found within the silhouette of the image. These elements could be the previously identified position of the person's feet and/or could be pixels, or groups of pixels, which are found in the silhouette image and selected depending on their relative position to the person's feet position within the aforementioned silhouetted image.

Preferably, the different computed contributions to the shadow image are discs of variable densities and sizes that depend on the position of said contributions or on the size and positions of the group of pixels selected in the silhouette image.

In accordance with an embodiment, the contributions are computed for at least two positions corresponding to the left and right feet of the person.

Furthermore, in yet another embodiment, the contributions are also computed from three positions, two of the positions corresponding to the left and right feet of the person, and the third one corresponding to the midpoint between them.

Also, contributions of the group of pixels, in accordance with some embodiments, can be calculated at least column by column or row by row.

In accordance with the invention, the mechanism of the process implemented with said algorithm consists of pixel shading.

The subject matter described herein can be implemented in software in combination with firmware and/or hardware. For example, the subject matter described herein can be implemented in software run by a processor.

### Brief description of the drawings

The previous and other advantages and characteristics will be more fully understood from the following detailed description of embodiments, with reference to the attached drawings, which must be considered in an illustrative and non-limiting manner, and in which:
Fig. 1 illustrates an example of the calculation and positioning process of the shadow used in the present invention.
Fig. 2 illustrates an embodiment of the proposed method based in the particular use of Pixel Shaders, wherein:
   Fig. 2a illustrates how the highest and lowest pixels of the person's silhouette are calculated;
   Fig. 2b illustrates how the feet positions are obtained as a local minimum below the approximate height of the knees;
   Fig. 2c illustrates the baseline between reference points located at the position of the feet and height correction of each pixel based on the said baseline;
   Fig. 2d illustrates some examples of the segments obtained from a selected portion of the person's silhouette;
   Fig. 2e is a lateral view of a segment and its casted shadow along with the intensity graph of the said shadow;
   Fig. 2f illustrates an image of the shadow as a contribution of the individual shadows of each segment; and
   Fig. 2g illustrates the final result of the virtual shadow obtained.
Fig. 3 illustrates the embodiment in which the final result of the virtual shadow obtained is based solely on shadow contributions from left and right feet positions in the silhouette image and the midpoint between them.

### Detailed description of several embodiments

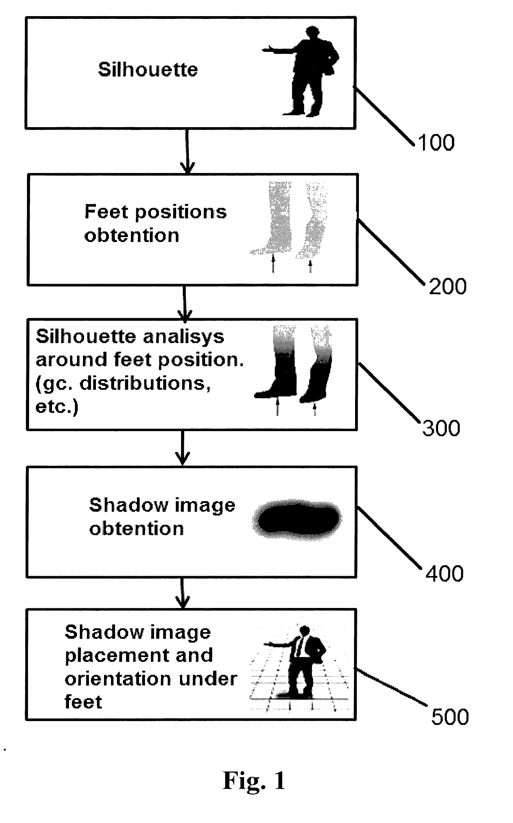

Fig. 1 illustrates the proposed method for obtaining a virtual shadow within a virtual scenario from a person. In particular, the proposal is based on obtaining or calculating the feet position/s within an image of the silhouette, originating from the image captured from a person. And this is done by the use of a physical camera. As seen in Fig. 1, from this captured image of the person's silhouette 100 and from an amount of pixels corresponding to an area of the silhouette that is found close to the feet position/s obtained 200, the shadow intensity is calculated at each point of the floor of the virtual scenario 300 and the result 400 is placed on a flat image. Previous calculations of the feet position/s of the person's silhouette image may be also used for the placement of the calculated shadow image below the person's feet 500. A flat surface including the represented shadow over it is positioned, and in the three-dimensional space, preferably beneath the person's image, and is oriented according to the feet position/s so that they match the shadow.

The physical camera used can be of any type, and is capable of capturing an image of the person and representing that image in the form of digital data. Preferably, the camera captures video images. The particular capabilities of the camera are not critical to the invention, and can be of any image resolution, color resolution, intensity resolution and/or of any frame rate.

The processing unit may include a processor, a microprocessor, a Pixel Shader, an Application Specific Integrated Circuit (ASIC), a Field Programmable Gate Array (FPGA), and/or other similar processing logic.

The proposed method may be implemented in hardware, software, firmware, or any combination thereof. If implemented in software, the functions may be stored on or encoded as one or more instructions or code on a computer-readable medium.

As used and described in this document, the products of the computer program comprise of computer-readable media.

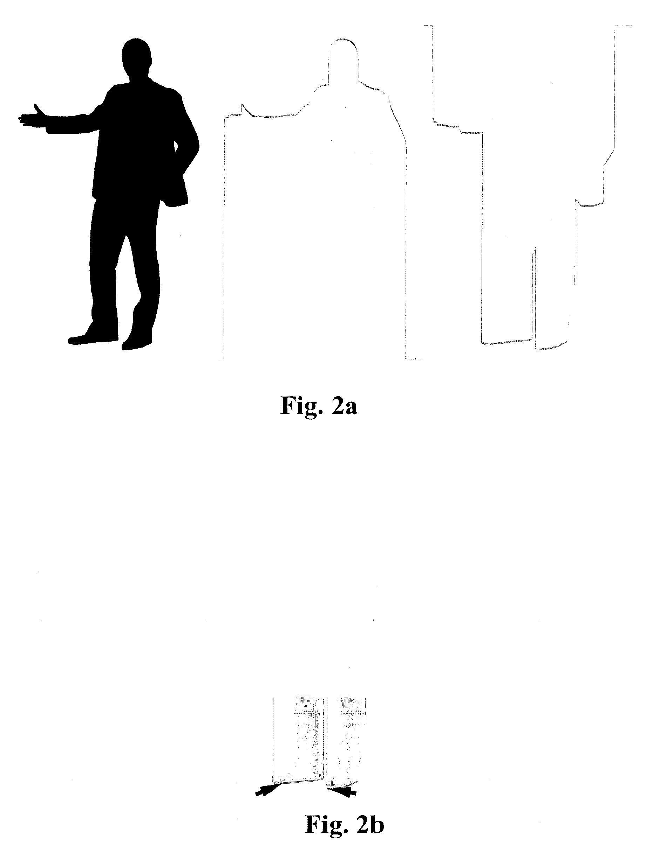

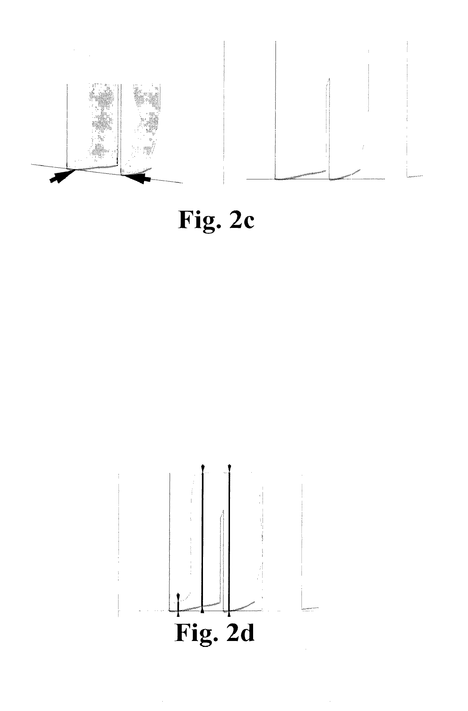

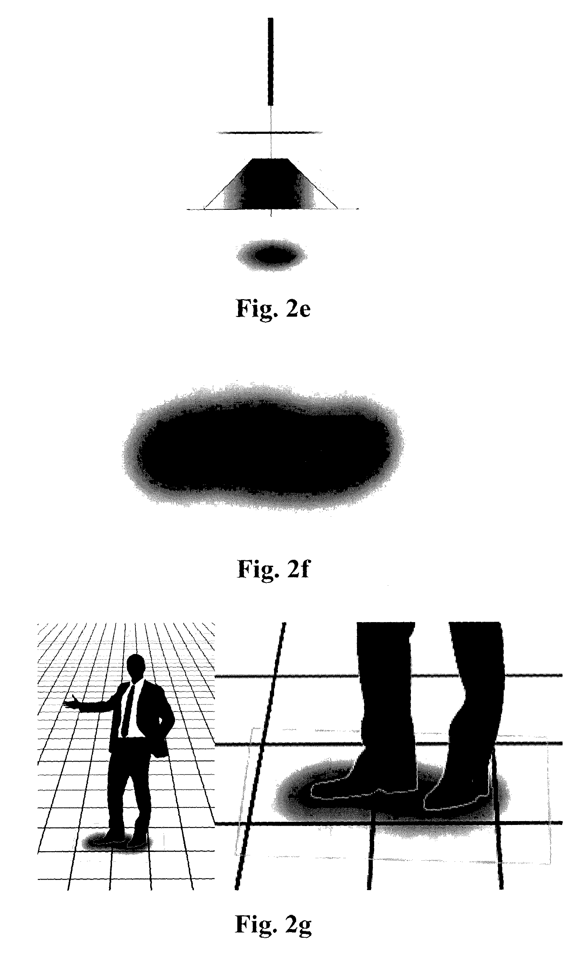

Fig. 2 illustrates a more detailed embodiment of the proposed method particularly oriented to its implementation via a Pixel Shader. That is to say a shader program normally run in a graphics processing unit. From the captured image of the person is calculated, for instance, for each column of pixels, which are the highest and the lowest limits of its silhouette (Fig. 2a). Alternatively, said calculation could be also performed in an equivalent way for each row of pixels.

Then (Fig. 2b), from said upper and lower limits of the person's silhouette, it is possible to determine different data: the area of the captured image in which can be found the person's feet; the approximate size of the person within the captured image, and therefore the area of influence that would affect the calculation of the shadow; and the feet position/s from the first to the last local minimums found in the curve corresponding to the lower limit of the person's silhouette. Once the feet position/s is known, it is taken as a valid assumption that both feet rest on the floor. It is therefore necessary to determine the height of each pixel taking into account this fact (Fig. 2c).

Then (Fig. 2d) from the heights which have now been approximately corrected and limited to a half-length of the person's silhouette, the segments are obtained from whose contributions is calculated the shadow image. Preferably, said contributions are discs of variable densities and sizes that depend on the position and size of each segment.

The shadow of each segment is calculated as a degraded disc of intensities which depends on its maximum and minimum height (Fig. 2e). In the central disc the shadow intensity is at its maximum and in the peripheral halo there is a radial gradient whose distribution can be modified to get more or less hard edged shadows. Following that, and from the contribution of the shadows of all the segments, the complete shadow image can be achieved, being the sum of all of them. (Fig. 2f).

Finally (Fig. 2g), the image of the shadow obtained is placed appropriately beneath the person's image in the virtual scenario. To that end different information is used, first the knowledge of the position in the surface space containing the person's image, and second the being indentifying the position/s of the feet. The surface with the shadow is positioned and rotated so that its axis, as seen from the camera, coincides with the baseline, on the previously calculated person's silhouette feet.

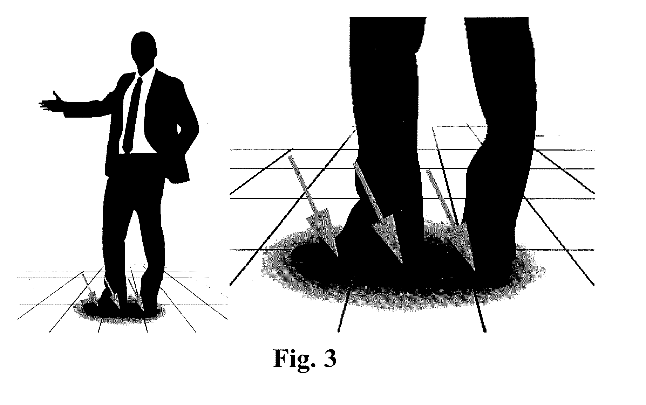

Fig. 3 illustrates an embodiment in which the pixel contributions of the virtual shadow obtained are based on the calculation of three positions. Two of these positions corresponding to the left and right feet of the person's silhouette and the third position corresponding to a midpoint between said left and right feet.

According to another embodiment which is not showed in this case, the contribution of pixels is calculated only for the two positions which correspond to the left and right feet of the presenter.

The scope of the present invention is defined in the following set of claims.

## Claims

1. A computer implemented method for obtaining a virtual shadow within a virtual scenario from a person, comprising capturing by means of a physical camera against a solid color background an image of said person, **characterized in that** the method comprises using an algorithm running in a processing unit of a computing device performing following steps:
a) extracting, from said captured image, a silhouette image of the person;
b) analyzing said extracted silhouette image, locating at least the position of one foot of the person in the silhouette image and obtain, from the position of at least one foot, its corresponding tridimensional position in the virtual scenario; and
c) obtain the image of the person's shadow and place it in the tridimensional position previously obtained, such that it is done by computing different contributions, said contributions coming from the selected located position of the person feet in the silhouette image or from different pixels or groups of pixels of the silhouette image, said different pixels or group of pixels being selected depending on their relative position in respect to the person feet.

2. The method of claim 1, wherein said computed different contributions to the shadow image includes discs of variable densities and sizes that depend on the position of said contributions or on the size and positions of the group of pixels selected in the silhouette image.

3. The method of claim 1, wherein the pixel contributions are at least computed for two positions corresponding to the left and right feet of the person.

4. The method of claim 3, wherein the pixel contributions are further computed for a midpoint between the left and right feet of the person.

5. The method of claim 1 or 2, wherein the pixel contributions are computed at least column by column or row by row.

6. The method of claim 1, wherein said algorithm is implemented by means of pixel shading.
